# EUROPEAN PATENT APPLICATION

(11) **EP 1 717 887 A1**
(43) Date of publication of application: **02.11.2006**
(21) Application number: 05751519.9
(22) Date of filing: 16.06.2005
(51) Int. Cl.: H01M 4/52, H01M 4/06, H01M 4/62, H01M 6/08

(54) **ALKALINE CELL**

(30) Priority: 24.06.2004 JP 2004186420
(71) Applicant: MATSUSHITA ELECTRIC INDUSTRIAL CO., LTD., Osaka 571-8501 (JP)
(72) Inventor: KATO, Fumio c/o Matsushita Electric Ind. Co. Ltd, 3-7 Shiromi 1-ch., Chuo-ku 5406319 Osaka (JP); SAWADA, K. c/o Matsushita Electric Ind. Co. Ltd, 3-7 Shiromi 1-ch., Chuo-ku 5406319 Osaka (JP); OKADA, Tadaya c/o Matsushita Electric Ind. Co. Ltd, 3-7 Shiromi 1-ch., Chuo-ku 5406319 Osaka (JP); MUKAI, Yasuo c/o Matsushita Electric Ind. Co. Ltd, 3-7 Shiromi 1-ch., Chuo-ku 5406319 Osaka (JP); NOYA, Shigeto c/o Matsushita Electric Ind. Co. Ltd, 3-7 Shiromi 1-ch., Chuo-ku 5406319 Osaka (JP)
(74) Representative: Bradley, Josephine Mary
(86) International application number: PCT/JP2005/011020
(87) International publication number: WO 2006/001210

(57) **Abstract**

Disclosed is an alkaline battery including a positive electrode, a negative electrode and an alkaline electrolyte, (1) the positive electrode having a positive electrode material mixture containing electrolytic manganese dioxide and nickel oxyhydroxide, (2) the nickel oxyhydroxide having a crystal in which at least Mg is dissolved, and (3) the nickel oxyhydroxide having a tap density determined after 500 taps of not less than 2 g/cm³, an average particle size based on volume of 8 to 20 µm, and an average nickel valence of 2.95 to 3.05.

## Description

### Technical Field

The present invention relates to a primary alkaline battery. More particularly, the invention relates to a so-called nickel-manganese battery with an inside-out structure including, as a positive electrode active material, a positive electrode material mixture comprising manganese dioxide and nickel oxyhydroxide.

### Background Art

Alkaline batteries usually have an inside-out structure, which comprises: a positive electrode case serving also as a positive electrode terminal; cylindrical positive electrode material mixture pellets comprising manganese dioxide which are attached to the inside of the positive electrode case; and a gel zinc negative electrode disposed in the hollow of the positive electrode material mixture pellets with a separator interposed therebetween. The positive electrode material mixture of alkaline batteries usually comprises electrolytic manganese dioxide and a graphite conductive material.

With the widespread of digital equipment in recent years, the load power of the equipment that use alkaline batteries is gradually increasing. Accordingly, demand is increasing for batteries that excel in high loaded discharge performance. In order to cope with this demand, it is proposed to improve high loaded discharge performance of alkaline batteries by mixing nickel oxyhydroxide with a positive electrode material mixture (see Patent Document 1). In recent years, alkaline batteries like this have been commercialized and spread widely.

Nickel oxyhydroxide for use in alkaline batteries is usually prepared by oxidizing spherical or oval-shaped nickel hydroxide for use in alkaline storage batteries with an oxidizing agent such as sodium hypochlorite (see Patent Document 2). For the preparation, in order to fill the nickel oxyhydroxide into a battery at a high density, nickel hydroxide having a high bulk density (tap density) and a β type crystal structure is used as the raw material. By treating the raw material with an oxidizing agent, nickel oxyhydroxide having a β type crystal structure can be obtained.

For the purpose of enhancing the capacity or utilization of the battery positive electrode, nickel hydroxide for alkaline storage batteries containing cobalt, zinc and the like is often used as the raw material (see Patent Document 3). Cobalt, zinc and the like are incorporated in the crystals of the nickel hydroxide, whereby a solid solution nickel hydroxide is formed.

Even in recent years, various proposals have been made. For example, Patent Document 4 discloses the use of substantially spherical nickel oxyhydroxide in an alkaline battery. Patent Document 5 discloses the use of a solid solution nickel oxyhydroxide containing zinc. Patent Document 6 discloses the use of a solid solution nickel oxyhydroxide containing zinc or cobalt. These proposals, however, have been made by merely applying well-known techniques of the positive electrode for alkaline storage batteries (secondary batteries) to primary batteries.

Alkaline batteries comprising a positive electrode material mixture containing the nickel oxyhydroxide described above have lower storage performance than alkaline batteries without the nickel oxyhydroxide. Particularly, the batteries containing the nickel oxyhydroxide suffer from high self-discharge particularly when they are stored at a high temperature. Under the circumstances, in order to cope with such problems, efforts have been made to apply techniques of alkaline storage batteries (secondary batteries) to primary batteries. For example, Patent Document 7 proposes to add ZnO or Y₂O₃ to a positive electrode material mixture so as to suppress self-discharge. Patent Document 8 proposes to add a rare-earth metal oxide such as Yb₂O₃ or Er₂O₃ to a positive electrode material mixture so as to suppress self-discharge.

Recently, proposals have been made in the field of alkaline storage batteries (secondary batteries) for improving output characteristic of the battery. That is to use nickel hydroxide having a high tap density (bulk density) in which Mg is dissolved (see Patent Documents 9 to 11).
Patent Document 1: Japanese Laid-Open Patent Publication No. Sho 57-72266
Patent Document 2: Japanese Examined Patent Publication No. Hei 4-80513
Patent Document 3: Japanese Examined Patent Publication No. Hei 7-77129
Patent Document 4: Japanese Laid-Open Patent Publication No. 2002-8650
Patent Document 5: Japanese Laid-Open Patent Publication No. Hei 2002-75354
Patent Document 6: Japanese Examined Patent Publication No. 2002-203546
Patent Document 7: Japanese Laid-Open Patent Publication No. 2001-15106
Patent Document 8: Japanese Laid-Open Patent Publication No. 2002-289187
Patent Document 9: Japanese Laid-Open Patent Publication No. 2001-357844
Patent Document 10: Japanese Laid-Open Patent Publication No. 2002-8649
Patent Document 11: Japanese Laid-Open Patent Publication No. 2003-151545

### Disclosure of Invention

### Problems to Be Solved by the Invention

Alkaline batteries comprising a positive electrode material mixture containing nickel oxyhydroxide have significantly improved discharge performance as compared to conventional alkaline batteries. However, since the alkaline batteries typically employ an inside-out type battery structure which is simple to manufacture, they have higher internal resistance and a greater voltage decrease during high loaded discharge or pulse discharge than alkaline storage batteries or lithium ion secondary batteries employing a spiral type (spirally-wound) battery structure.

In an effort to cope with such problems by improving the materials, the above-mentioned approach to use nickel hydroxide in which Mg is dissolved, which is proposed for alkaline storage battery applications, can be conceived. However, in order to produce primary batteries having satisfactory characteristics, there is a need to optimize the physical properties of the nickel oxyhydroxide for primary battery applications, including nickel valence, particle size and Mg content.

### Means for Solving the Problem

In view of the above, the present invention is intended to improve the characteristics of an alkaline battery during high loaded discharge or pulse discharge by improving the physical properties of the nickel oxyhydroxide as the positive electrode active material.

More specifically, the present invention relates to an alkaline battery comprising a positive electrode, a negative electrode and an alkaline electrolyte, the positive electrode comprising a positive electrode material mixture containing electrolytic manganese dioxide and nickel oxyhydroxide, wherein (1) the nickel oxyhydroxide has a crystal in which at least Mg is dissolved, (2) the tap density determined after 500 taps is not less than 2 g/cm³, (3) the average particle size based on volume is 8 to 20 µm, and (4) the average nickel valence is 2.95 to 3.05.

The amount of Mg is preferably 0.1 to 7 mol% relative to the total amount of Ni and Mg contained in the nickel oxyhydroxide.
Particularly preferably, in the crystal of the nickel oxyhydroxide, at least one element M selected from the group consisting of Zn, Co and Mn is also dissolved.

The present invention particularly relates to an alkaline battery comprising a positive electrode, a negative electrode and an alkaline electrolyte, the positive electrode comprising a positive electrode material mixture containing electrolytic manganese dioxide and nickel oxyhydroxide, wherein (1) the nickel oxyhydroxide has a crystal in which at least Mg as the essential component and at least one element M selected from the group consisting of Co, Zn and Mn are dissolved, (2) the tap density determined after 500 taps (hereinafter simply referred to as "tap density (500 taps)") is not less than 2 g/cm³, (3) the average particle size based on volume is 8 to 20 µm, and (4) the average nickel valence is 2.95 to 3.05.

When the crystal of the nickel oxyhydroxide contains element M, preferably, the amount of Mg is not less than 0.1 mol% relative to the total amount of Ni and Mg contained in the nickel oxyhydroxide, and the total amount of Mg and element M is not greater than 7 mol% relative to the total amount of Ni, Mg and element M.
Particularly preferably, the amount of element M is not less than 0.05 to 4 mol% relative to the total amount of Ni, Mg and element M contained in the nickel oxyhydroxide.

Preferably, the amount of the electrolytic manganese dioxide is 20 to 90 wt% relative to the total amount of the electrolytic manganese dioxide and the nickel oxyhydroxide contained in the positive electrode material mixture, and the amount of the nickel oxyhydroxide is 10 to 80 wt% relative to the total amount.

Preferably, the positive electrode material mixture further comprises a graphite conductive material. When the positive electrode material mixture contains a graphite conductive material, the amount of the graphite conductive material is preferably 3 to 10 wt% relative to the total amount of the electrolytic manganese dioxide, the nickel oxyhydroxide and the graphite conductive material contained in the positive electrode material mixture.

Preferably, the positive electrode material mixture further comprises at least one rare-earth oxide selected from the group consisting of Y₂O₃, Er₂O₃, Tm₂O₃, Yb₂O₃ and Lu₂O₃. When the positive electrode material mixture contains a rare-earth oxide, the amount of the rare-earth oxide is preferably 0.1 to 2 wt% relative to the total amount of the electrolytic manganese dioxide, the nickel oxyhydroxide, the graphite conductive material and the rare-earth oxide contained in the positive electrode material mixture.

### Effects of the Invention

When a small amount of Mg is dissolved in the crystal of nickel oxyhydroxide, the oxidation reduction potential (discharge voltage) and electron conductivity of the nickel oxyhydroxide can be enhanced. Accordingly, battery characteristics during high loaded discharge or pulse discharge can be improved significantly. Moreover, because the present invention employs nickel oxyhydroxide having a high tap density (500 taps) of not less than 2 g/cm³ and a relatively large average particle size (D50) based on volume of 8 to 20 µm, the positive electrode material mixture has improved moldability, which means the positive electrode active material can be filled into a battery at a high density.

When the average nickel valence of the nickel oxyhydroxide is controlled to be within 2.95 to 3.05, the amount of energy obtainable from the resulting battery as battery capacity can be maximized.

As described above, according to the present invention, it is possible to improve battery characteristics during high loaded discharge or pulse discharge as well as to increase capacity of an alkaline battery comprising a positive electrode material mixture containing nickel oxyhydroxide.
The nickel oxyhydroxide in which Mg is dissolved with an average nickel valence of 2.95 to 3.05 has a high oxidation reduction potential, so that the resulting battery tends to exhibit high self-discharge. This tendency can be suppressed dramatically by controlling the average particle size based on volume and tap density of the nickel oxyhydroxide to 8 to 20 µm and to not less than 2 g/cm³, respectively. Presumably, this is due to increased contact between particles in the positive electrode material mixture formed into pellets.

### Brief Description of Drawings

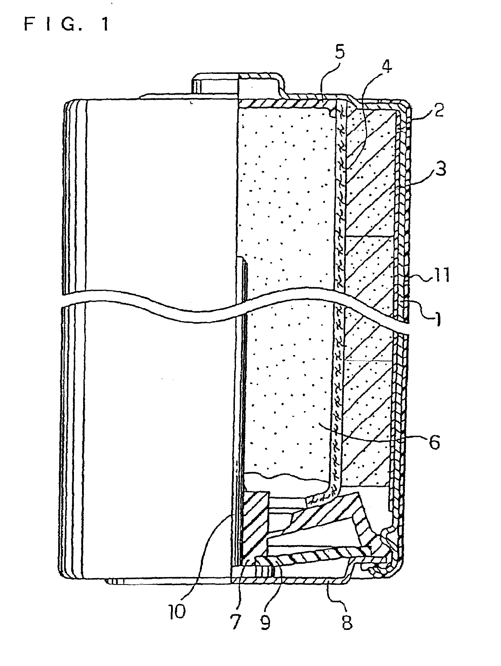

FIG. 1 is a front view partially in cross section of an alkaline battery produced in Examples of the present invention.

### Best Mode for Carrying Out the Invention

The positive electrode of an alkaline battery of the present invention comprises a positive electrode material mixture containing, as the positive electrode active material, electrolytic manganese dioxide and nickel oxyhydroxide. As used herein, nickel oxyhydroxide is a solid solution comprising a crystal in which at least Mg is dissolved. Such solid solution nickel oxyhydroxide has a high oxidation reduction potential (discharge voltage) and high electron conductivity. Accordingly, the battery characteristics during high loaded discharge or pulse discharge can be improved significantly.

The amount of Mg is preferably 0.1 to 7 mol% relative to the total amount of Ni and Mg contained in the nickel oxyhydroxide, more preferably 2 to 5 mol%. If the amount of Mg is less than 0.1 mol% relative to the total amount of Ni and Mg, the effect of the nickel oxyhydroxide to increase oxidation reduction potential and electron conductivity may not appear sufficiently. In contrast, if the amount of Mg exceeds 7 mol% relative to the total amount of Ni and Mg, the amount of Ni in the nickel oxyhydroxide will be small relative to that of Mg, failing to provide sufficient battery capacity.

In the crystal of the nickel oxyhydroxide, it is particularly preferred that Mg be dissolved as the essential component, and that at least one element M selected from the group consisting of Zn, Co and Mn be also dissolved.

When Mg and Zn are dissolved together in the crystal of nickel oxyhydroxide, in addition to the effect of increasing battery characteristics during high loaded discharge or pulse discharge, the effect of increasing oxygen production overvoltage on the nickel oxyhydroxide appears. Accordingly, the storage characteristic (shelf life characteristic) of the resulting battery improves. Preferably, the amount of Zn is 0.05 to 4 mol% relative to the total amount of Ni, Mg and Zn contained in the nickel oxyhydroxide, more preferably, 1 to 3 mol%.

When Mg is dissolved together with Co and/or Mn in the crystal of nickel oxyhydroxide, high valence nickel oxyhydroxide can be obtained easily. Accordingly, in addition to the effect of improving battery characteristics during high loaded discharge or pulse discharge, a further higher capacity can be achieved. The amount of Co (or Mn) is preferably 0.05 to 4 mol% relative to the total amount of Ni, Mg and Co (or Mn) contained in the nickel oxyhydroxide, more preferably 1 to 3 mol%.

When the crystal of nickel oxyhydroxide further contains element M, the amount of Mg is preferably not less than 0.1 mol% relative to the total amount of Ni, Mg and element M contained in the nickel oxyhydroxide, more preferably not less than 2 mol%. Also, the total amount of Mg and element M is preferably not greater than 7 mol% relative to the total amount of Ni, Mg and element M, more preferably not greater than 5 mol%.

The use of the nickel oxyhydroxide having a high density and a relatively large particle size improves the moldability of the positive electrode material mixture and the filling property of the positive electrode active material into the battery. On the basis thereof, the tap density (500 taps) of the nickel oxyhydroxide contained in the positive electrode material mixture should be controlled to not less than 2 g/cm³, preferably not less than 2.1 g/cm³. If the tap density (500 taps) is less than 2 g/cm³, it will be difficult to prepare a positive electrode material mixture having a high density. Generally speaking, it is difficult to prepare nickel oxyhydroxide having a tap density exceeding 2.5 g/cm³.

The average particle size (D50) based on volume is controlled to 8 to 20 µm, preferably 10 to 15 µm. If the average particle size based on volume is less than 8 µm, the production of positive electrode material mixture pellets will be difficult. Generally, it is difficult to prepare nickel oxyhydroxide having an average particle size based on volume exceeding 20 µm.

In the case where nickel hydroxide, the raw material of the nickel oxyhydroxide, is a solid solution comprising a crystal in which Mg and element M are dissolved, the preparation of nickel oxyhydroxide having a high tap density can sometimes be difficult. In order to address this, in the present invention, the conditions for crystallizing nickel hydroxide serving as the raw material are optimized for the synthesis of nickel hydroxide having a high tap density. The synthesized nickel hydroxide is then converted to nickel oxyhydroxide.

The conditions to be optimized for crystallizing nickel hydroxide include the pH, temperature and nickel-ammine complex ion concentration in a vessel used for the synthesis of the nickel hydroxide, etc. Preferred conditions are, but not limited to, a pH of 12.8 to 13.1, a temperature of 45 to 50°C, a nickel-ammine complex ion concentration of about 10 to 15 mg/L.

The nickel oxyhydroxide used in the present invention has an average nickel valence of 2.95 to 3.05. If the average nickel valence is less than 2.95, the battery capacity will be insufficient. If the average nickel valence exceeds 3.05, a crystal of γ type structure will be produced in a relatively large amount in the nickel oxyhydroxide, degrading battery characteristics. The nickel valence of the nickel oxyhydroxide can be controlled to the above range by adjusting the conditions for oxidizing nickel hydroxide as the raw material with an oxidizing agent (e.g., sodium hypochlorite). The average valence of the nickel contained in the nickel oxyhydroxide can be determined by, for example, ICP emission spectrometry and oxidation reduction titration, which will be explained below.

### (1) ICP Emission Spectrometry

ICP spectrometry enables the measurement of weight ratio of metal elements in the nickel oxyhydroxide. First, a solution is prepared by heating an aqueous solution of nitric acid to which a predetermined amount of nickel oxyhydroxide has been added, until dissolved completely. The thus-obtained solution is used for ICP spectrometry. As the spectrometer, VISTA-RL manufactured by VARIAN, Inc. can be used, for example. According to the ICP spectrometry, the weight ratio of the elements, such as nickel, aluminum, manganese and cobalt, contained in the nickel oxyhydroxide can be determined.

### (2) Oxidation Reduction Titration

First, potassium iodide and sulfuric acid are added to the nickel oxyhydroxide, followed by thorough stirring to dissolve the nickel oxyhydroxide completely. During this process, nickel ions, manganese ions and cobalt ions which have a high valence oxidize the potassium iodide into iodine, and they themselves are reduced to divalent. Subsequently, the produced/liberated iodine is titrated using 0.1 mol/L aqueous solution of sodium thiosulfate. The titration amount reflects the amounts of nickel ions, manganese ions, cobalt ions having a higher valence than divalent as mentioned above. Accordingly, by making an assumption (presumption) that the average valence of manganese in the nickel oxyhydroxide is 4, and that of cobalt is 3 based on the measurement results of metal weight ratio, the average valence of nickel in the nickel oxyhydroxide can be estimated. As for the average valences of Mn and Co, they can be estimated by plotting the equilibrium potential of the nickel oxyhydroxide in a pH-potential diagram (Pourbaix diagram) of Mn or Co.

When the electrolytic manganese dioxide and the nickel oxyhydroxide are compared, the electrolytic manganese dioxide excels in terms of capacity per unit weight (mAh/g), ease of filling into battery and material cost, whereas the nickel oxyhydroxide excels in terms of discharge voltage, high loaded discharge characteristic and pulse discharge characteristic.

Considering the balance of battery characteristics and the cost, preferred amounts of the nickel oxyhydroxide and the electrolytic manganese dioxide are preferably 10 to 80 wt% and 20 to 90 wt%, respectively, relative to the total amount of the nickel oxyhydroxide and the electrolytic manganese dioxide contained in the positive electrode material mixture. From the viewpoint of producing a battery having excellent balance of characteristics, it is more preferred that the amounts of the nickel oxyhydroxide and the electrolytic manganese dioxide be 30 to 60 wt% and 40 to 70 wt%, respectively.
In the case where high loaded discharge performance and pulse discharge characteristic need to be further enhanced, the amount of the nickel oxyhydroxide is preferably 60 to 80 wt% relative to the total amount of the nickel oxyhydroxide and the electrolytic manganese dioxide contained in the positive electrode material mixture.

The volume energy density of the active material in the positive electrode material mixture should preferably be high. In order to ensure sufficient high loaded discharge performance, the positive electrode material mixture preferably contains a graphite conductive material. Accordingly, the amount of the graphite conductive material is preferably 3 to 10 wt% relative to the total amount of the nickel oxyhydroxide, the electrolytic manganese dioxide and the graphite conductive material contained in the positive electrode material mixture, more preferably 5 to 8 wt%. If the amount of the graphite conductive material is reduced to less than 3 wt%, the electron conductivity of the entire positive electrode material mixture will be insufficient. Conversely, if the amount of the graphite conductive material exceeds 10 wt%, the proportion of the active material relative to the positive electrode material mixture will be small, which might result insufficient volume energy density of the positive electrode material mixture. As the graphite conductive material, any artificial graphite or natural graphite having an average particle size of, for example, 10 to 30 µm can be used. They may be used singly or in combination.

Preferably, the positive electrode material mixture further comprises at least one rare-earth oxide selected from the group consisting of Y₂O₃, Er₂O₃, Tm₂O₃, Yb₂O₃ and Lu₂O₃. These rare-earth metal oxides dissolve in an alkaline electrolyte in a slightly small amount and reprecipitate while forming a hydroxide. As a result, a film containing the rare-earth metal is formed on the particle surface of the nickel oxyhydroxide. The film serves to increase oxygen production overvoltage of the positive electrode.

The solid solution nickel oxyhydroxide comprising a crystal in which Mg is dissolved has a particularly high equilibrium potential, so that the resulting battery has a relatively high open circuit voltage, and the rate of self-discharge tends to be high. Accordingly, the addition of a small amount of the rare-earth metal oxide to the positive electrode material mixture significantly improves storage characteristic of the battery.

When the positive electrode material mixture contains the rare-earth oxide, the amount of the rare-earth oxide is preferably 0.1 to 2 wt% relative to the total amount of the electrolytic manganese dioxide, the nickel oxyhydroxide, the graphite conductive material and the rare-earth oxide, more preferably 0.5 to 1.5 wt%.

### Examples

The present invention will be described in more detail below with reference to examples, but it should be understood that the present invention is not limited to the examples given below.
<<Example 1>>
(Preparation of Nickel Hydroxide)
Pure water and a small amount of hydrazine as a reducing agent were added to a reaction vessel equipped with a stirring blade. While the vessel was bubbled with nitrogen gas, constant amounts of aqueous solution of nickel sulfate (II), aqueous solution of magnesium sulfate (II), aqueous solution of sodium hydroxide and ammonium water, each at a predetermined concentration, were fed by a pump. During the feeding, the vessel was continuously stirred, and the pH and temperature were maintained at 13.0 and 50°C, respectively. Even after the addition, the vessel was continuously stirred sufficiently to precipitate the nuclei of nickel hydroxide and grow the nuclei. The concentration of nickel-ammine complex ion in the vessel was 10 mg/L. The residence time of the produced particles in the vessel was 15 hours. Subsequently, the obtained particles were heated in another aqueous solution of sodium hydroxide to remove sulfate ions. The particles were then washed with water, and dried in a vacuum. Thereby, nickel hydroxide a (composition: Ni_{0.95}Mg_{0.05}(OH)₂) as the raw material was prepared.

Nickel hydroxide b (composition: Ni_{0.95}Zn_{0.05}(OH)₂) was prepared in the same manner as described above except that an aqueous solution of zinc sulfate (II) was used in place of the aqueous solution of magnesium sulfate (II).

Nickel hydroxide c (composition: Ni_{0.95}Zn_{0.025}Co_{0.025}(OH)₂) was prepared in the same manner as described above except that equal amounts of aqueous solution of zinc sulfate (II) and aqueous solution of cobalt sulfate (II) were used in place of the aqueous solution of magnesium sulfate (II).

Nickel hydroxide d without a metal other than nickel was prepared in the same manner as described above except that neither the magnesium sulfate (II), the zinc sulfate (II) or the cobalt sulfate (II) was used.

The obtained nickel hydroxide a serving as the raw material was found to comprise a crystal having a β type structure by powder X-ray diffractometry. The nickel hydroxide a was also found to have the following physical properties:
average particle size based on volume: approximately 11 µm,
tap density (500 taps): approximately 2.1 g/cm³, and
BET specific surface area: approximately 12 m²/g.

The obtained nickel hydroxides b to d serving as the raw material were found to comprise a crystal having a β type structure by powder X-ray diffractometry. The nickel hydroxides b to d were also found to have the following physical properties:
average particle size based on volume: approximately 10 µm,
tap density (500 taps): approximately 2.2 g/cm³, and
BET specific surface area: approximately 13 m²/g.

The tap density was measured according to JIS-K5101 using Tap Denser KYT-3000 manufactured by Seishin Enterprise Co., Ltd. The same applies to other examples below.
The average particle size based on volume was measured by Microtrac particle size distribution analyzer FRA manufactured by Nikkiso Co., Ltd. The same applies to other examples below.

### (Preparation of Nickel Oxyhydroxide)

The nickel hydroxide a in an amount of 200 g was admitted into 1 L of aqueous solution of sodium hydroxide having a concentration of 0.1 mol/L. Then, a sufficient amount of aqueous solution of sodium hypochlorite (effective chlorine concentration: 10 wt%) serving as an oxidizing agent was added thereto, followed by stirring to convert it to nickel oxyhydroxide. The obtained particles were thoroughly washed with water, dried in a vacuum at 60°C for 24 hours. Thereby, nickel oxyhydroxide A was prepared.

In the same manner as above, the nickel hydroxides b to d serving as the raw material were also converted to nickel oxyhydroxides B to D.

The obtained nickel oxyhydroxide A was found to comprise a crystal having a β type structure by powder X-ray diffractometry. The nickel oxyhydroxide A was also found to have the following physical properties. The average nickel valence was measured by the above-described method. The same applies to the following.
Average particle size based on volume: 11 µm
Tap density (500 taps): 2.18 g/cm³
BET specific surface area: 14 m²/g
Average nickel valence: 2.99

The obtained nickel oxyhydroxides B to D were found to comprise a crystal having a β type structure by powder X-ray diffractometry. The nickel oxyhydroxides B to C(D?) were also found to have the following physical properties:
average particle size based on volume: approximately 10 µm,
tap density (500 taps): approximately 2.3 g/cm³,
BET specific surface area: approximately 15 m²/g, and
average nickel valence: approximately 3.0 (2.98 to 3.02).

### (Production of Positive Electrode Material Mixture Pellet)

Electrolytic manganese dioxide, the nickel oxyhydroxide A and graphite were combined and mixed at a weight ratio of 50:45:5 to produce a positive electrode material mixture powder. An alkaline electrolyte in an amount of 1 part by weight was added to 100 parts by weight of the positive electrode material mixture powder, followed by stirring and mixing with a mixer until uniform. The resultant was sized to have a uniform particle size. The alkaline electrolyte used here was 40 wt% aqueous solution of potassium hydroxide. The obtained particulate product was pressed into hollow cylindrical pellets. Thereby, a positive electrode material mixture pellet A was produced.

Positive electrode material mixture pellets B to D were produced in the same manner as above except using the nickel oxyhydroxides B to D.

### (Production of Nickel-Manganese Battery)

AA-sized nickel-manganese batteries A, B, C and D were produced in the following procedure using the positive electrode material mixture pellets A, B, C and D, respectively. The amounts of the positive electrode material mixtures filled into the batteries were all equal. FIG. 1 is a front view partially in cross section of the nickel-manganese batteries produced in this example.

A positive electrode case 1 serving as the positive electrode terminal was a can case made of steel plated with nickel. On the inner surface of the positive electrode case 1 was formed a graphite coating film 2. In the positive electrode case 1 was inserted a plurality of short cylindrical positive electrode material mixture pellets 3. Subsequently, the positive electrode material mixture pellets 3 were again pressed while in the positive electrode case 1, so that they were attached to the inner surface of the positive electrode case 1. In the hollow of the positive electrode material mixture pellets 3 was inserted a separator 4 such that the separator contacted the inner surface of the hollow. On the bottom of the hollow in the can case was placed an insulating cap 5.

Subsequently, an alkaline electrolyte was injected into the positive electrode case 1 to wet the positive electrode material mixture pellets 3 and the separator 4. After the injection of the electrolyte, a gel negative electrode 6 was filled inside the separator 4. The gel negative electrode 6 was composed of sodium polyacrylate as a gelling agent, an alkaline electrolyte and a zinc powder as the negative electrode active material. For the alkaline electrolyte, 40 wt% aqueous solution of potassium hydroxide was used.

Meanwhile, a sealing plate 7 made of resin and comprising a short cylindrical main part and a thin brim part having an inner groove on the edge portion of the brim part was prepared. Into the inner groove on the edge portion of the sealing plate 7 was fitted the edge portion of a bottom plate 8 serving as the negative electrode terminal. Between the sealing plate 7 and the bottom plate 8 was placed an insulating washer 9. In the hollow of the main part of the sealing plate 7 was inserted a nail-shaped negative electrode current collector 10.

The negative electrode current collector 10 integrally combined with the sealing plate 7, the bottom plate 8 and the insulating washer 9 was inserted into the gel negative electrode 6. Then, the edge portion of the opening of the positive electrode case 1 was crimped on the edge portion of the bottom plate 8 with the edge portion of the sealing plate 7 therebetween, whereby the opening of the positive electrode case 1 was sealed. Finally, the outer surface of the positive electrode case 1 was covered with an outer label 11. Thereby, a nickel-manganese battery was produced.

### (Evaluation of Nickel-Manganese Battery)

### <High Loaded Discharge Performance>

The initial state nickel-manganese batteries A to D were continuously discharged at a constant power of 1 W at 20°C, and the discharge time until the battery voltage reached an end-of-discharge voltage of 0.9 V and the average voltage during discharge were measured. The results are shown in Table 1. The discharge time of the batteries A to C is given in relative terms, with 100 representing the discharge time of the nickel-manganese battery D.

### <Pulse Discharge Characteristic>

The initial state nickel-manganese batteries A to D were pulse discharged at 20°C. In the pulse discharge, a procedure was repeated in which the battery was discharged at a constant current of 1 A for 10 seconds, and then the discharge was terminated for 50 seconds. During the repetition of the pulse discharge, a voltage decrease from the open circuit voltage (OCV) to the discharge voltage at the second pulse, as well as the total discharge time until the battery voltage reached 0.9 V during the pulse discharge, were measured. The results are shown in Table 1. The total discharge time of the batteries A to C is given in relative terms, with 100 representing the total discharge time of the nickel-manganese battery D.

**Table 1**

| Battery | Nickel oxyhydroxide (Dissolved element: mol%) | Continuous discharge at 1 W | | Pulse discharge at 1 A | |
|---|---|---|---|---|---|
| | | Discharge time | Average voltage (mV) | Voltage decrease at 2nd pulse (mV) | Total discharge time |
| A | A (Mg: 5) | 105 | 1.358 | 51 | 108 |
| B | B (Zn: 5) | 98 | 1.329 | 62 | 99 |
| C | C (Zn: 2.5, Co: 2.5) | 99 | 1.325 | 65 | 100 |
| D | D (None) | 100 (Reference value) | 1.331 | 61 | 100 (Reference value) |

The results of Table 1 show that the battery A containing the nickel oxyhydroxide A in which Mg was dissolved exhibited higher characteristics during the high loaded discharge (continuous discharge at 1 W) and the pulse discharge than the batteries B to D.

The reason that the results shown in Table 1 were obtained can be explained as follows.
As for high loaded discharge performance, Mg was dissolved in nickel oxyhydroxide, whereby the oxidation reduction potential shifted to positive side, and the discharge voltage increased. As a result, the capacity of the battery A increased. Similarly, as for pulse discharge characteristic, Mg was dissolved in nickel oxyhydroxide, whereby the electron conductivity of the nickel oxyhydroxide increased. As a result, the voltage decrease was suppressed in the battery A. As discussed above, according to the present invention, it is possible to significantly improve the characteristics of the alkaline battery during high loaded discharge or pulse discharge.

### <<Example 2>>

In this example, an investigation was conducted on the average nickel valence of the nickel oxyhydroxide.
(Preparation of Nickel Oxyhydroxide)
The nickel hydroxide a (composition: Ni_{0.95}Mg_{0.05}(OH)₂) as the raw material of Example 1 in an amount of 200 g was admitted into 1 L of aqueous solution of sodium hydroxide at a concentration of 0.1 mol/L. Then, a predetermined amount (expressed in vcm³) of aqueous solution of sodium hypochlorite (effective chlorine concentration: 10 wt%) serving as an oxidizing agent was added thereto, followed by stirring to convert it to nickel oxyhydroxide. The obtained particles were thoroughly washed with water, dried in a vacuum at 60°C for 24 hours. Thereby, nickel oxyhydroxide P1 was prepared.

Nickel oxyhydroxides P2 to P6 were prepared in the same manner as above except that the amount of aqueous solution of sodium hypochlorite was changed to 1.1 v, 1.2 v, 1.3 v, 1.4 v and 1.5 vcm³, respectively.

For the thus-prepared six different nickel oxyhydroxides and the nickel oxyhydroxide D (in which no additional metal was dissolved) of Example 1 for comparison, the average nickel valence was determined in the same manner as described previously. The results are shown in Table 2. The nickel oxyhydroxides P1 to P6 were found to comprise a crystal having a β type structure by powder X-ray diffractometry. The nickel oxyhydroxides P1 to P6 were also found to have the following physical properties:
average particle size based on volume: approximately 10 µm,
tap density (500 taps): approximately 2.2 g/cm³, and
BET specific surface area: approximately 15 m²/g.

**Table 2**

| Nickel oxyhydroxide | Amount of aqueous solution of hypochlorite (cm³) | Average nickel valence |
|---|---|---|
| P1 | v | 2.88 |
| P2 | 1.1 v | 2.95 |
| P3 | 1.2 v | 2.99 |
| P4 | 1.3 v | 3.02 |
| P5 | 1.4 v | 3.05 |
| P6 | 1.5 v | 3.09 |
| D | (1.2 v) | 3.01 |

### (Preparation of Positive Electrode Material Mixture Pellet)

Positive electrode material mixture pellets P1 to P6 containing the nickel oxyhydroxides P1 to P6 were produced in the same manner as in Example 1.

### (Production of nickel-manganese Battery)

Nickel-manganese batteries P1 to P6 were produced in the same manner as in Example 1 except using the positive electrode material mixture pellets P1 to P6. The amounts of the positive electrode material mixtures filled into the batteries were all equal.

### (Evaluation of Nickel-Manganese Battery)

In the same manner as in Example 1, the obtained batteries P1 to P6 were evaluated in terms of high loaded discharge performance and pulse discharge characteristic. The results are shown in Table 3. The discharge time of the batteries P1 to P6 obtained during the high loaded discharge is given in relative terms, with 100 representing the discharge time of the nickel-manganese battery D. Likewise, the total discharge time of the batteries P1 to P6 obtained during the pulse discharge is given in relative terms, with 100 representing the total discharge time of the nickel-manganese battery D.

**Table 3**

| Battery | Nickel oxyhydroxide (average nickel valence) | Continuous discharge at 1 W | | Pulse discharge at 1 A | |
|---|---|---|---|---|---|
| | | Discharge time | Average voltage (mV) | Voltage decrease at 2nd pulse (mV) | Total discharge time |
| P1 | P1 (2.88) | 98 | 1.351 | 62 | 99 |
| P2 | P2 (2.95) | 102 | 1.354 | 56 | 103 |
| P3 | P3 (2.99) | 105 | 1.358 | 51 | 108 |
| P4 | P4 (3.02) | 106 | 1.359 | 53 | 107 |
| P5 | P5 (3.05) | 103 | 1.354 | 57 | 102 |
| P6 | P6 (3.09) | 99 | 1.348 | 63 | 99 |
| D | D (3.01) | 100 (Reference value) | 1. 331 | 61 | 100 (Reference value) |

The results of Table 3 show that the batteries P2 to P5 containing the solid solution nickel oxyhydroxides P2 to P5 having an average nickel valence of 2.95 to 3.05 in which Mg was dissolved exhibited higher characteristics during the high loaded discharge and pulse discharge than other batteries. In the case where the average nickel valence was less than 2.95 (battery P1), the discharge voltage during high loaded discharge was relatively high, but the capacity (mAh/g) per unit weight of the nickel oxyhydroxide was small, so that the discharge time shortened and, at the same time, the pulse discharge characteristic degraded. Conversely, in the case where the average nickel valence was greater than 3.05 (battery P6), similar to the above, the characteristics degraded. This is presumably because when the valence of the nickel oxyhydroxide is extremely increased, the proportion of inert crystal having a γ type structure increases in the nickel oxyhydroxide. The foregoing indicates that it is extremely important to control the average nickel valence to be in an optimal range (2.95 to 3.05) when the solid solution nickel oxyhydroxide in which Mg is dissolved is applied to a primary battery.

### <<Example 3>>

In this example, an experiment was conducted to find an optimal amount of Mg in the nickel oxyhydroxide.
(Preparation of Nickel Hydroxide as Raw Material)
Solid solution nickel hydroxides m1 to m9 serving as the raw material were prepared in the same manner as in Example 1 (reaction crystallization) except that the amount of the aqueous solution of magnesium sulfate (II) fed into the reaction vessel was changed. In the solid solution nickel hydroxides m1 to m9, Mg was dissolved at a concentration shown in Table 4. The Mg concentration shown in Table 4 is the amount (mol%) of Mg relative to the total of Ni and Mg contained in the solid solution.

The obtained nickel hydroxides m1 to m9 were found to comprise a crystal having a β type structure and to have the following physical properties:
average particle size based on volume: approximately 10 µm,
tap density (500 taps): approximately 2.1 g/cm³, and
BET specific surface area: approximately 10 m²/g.

**Table 4**

| Nickel hydroxide | Mg concentration (mol%) |
|---|---|
| M1 | 0.05 |
| M2 | 0.1 |
| M3 | 0.5 |
| M4 | 1 |
| M5 | 3 |
| M6 | 5 |
| M7 | 7 |
| M8 | 10 |
| M9 | 0 |

### (Preparation of Nickel Oxyhydroxide)

In the same manner as in Example 1, the nickel hydroxides m1 to m9 were converted to nickel oxyhydroxides. The obtained particles were thoroughly washed with water, and dried in a vacuum at 60°C for 24 hours. Thereby, nickel oxyhydroxides M1 to M9 were prepared.

The obtained nickel oxyhydroxides M1 to M9 were found to comprise a crystal having a β type structure and to have the following physical properties:
average particle size based on volume: approximately 10 µm,
tap density (500 taps): approximately 2.2 g/cm³,
BET specific surface area: approximately 15 m²/g, and
average nickel valence : approximately 3.0 (2.98 to 3.02).

### (Production of Positive Electrode Material Mixture Pellet)

Positive electrode material mixture pellets M1 to M9 containing the nickel oxyhydroxides M1 to M9 were produced in the same manner as in Example 1.

### (Production of Nickel-Manganese Battery)

Nickel-manganese batteries M1 to M9 were produced in the same manner as in Example 1 except using the positive electrode material mixture pellets M1 to M9. The amounts of the positive electrode material mixtures filled into the batteries were all equal.

### (Evaluation of Nickel-Manganese Battery)

In the same manner as in Example 1, the obtained batteries M1 to M9 were evaluated in terms of high loaded discharge performance and pulse discharge characteristic. The results are shown in Table 5. The discharge time of the batteries M1 to M8 is given in relative terms, with 100 representing the discharge time of the nickel-manganese battery M9. Likewise, the total discharge time of the batteries M1 to M8 is given in relative terms, with 100 representing the total discharge time of the nickel-manganese battery M9.

**Table 5**

| Battery | Nickel oxyhydroxide (Dissolved element: mol%) | Continuous discharge at 1 W | | Pulse discharge at 1 A | |
|---|---|---|---|---|---|
| | | Discharge time | Average voltage (mV) | Voltage decrease at 2nd pulse (mV) | Total discharge time |
| M1 | M1 (Mg: 0.05) | 100 | 1.337 | 58 | 101 |
| M2 | M2 (Mg: 0.1) | 103 | 1.349 | 52 | 105 |
| M3 | M3 (Mg: 0.5) | 104 | 1.352 | 52 | 106 |
| M4 | M4 (Mg: 1) | 105 | 1.354 | 51 | 106 |
| M5 | M5 (Mg: 3) | 105 | 1.357 | 51 | 107 |
| M6 | M6 (Mg: 5) | 105 | 1.358 | 51 | 108 |
| M7 | M7 (Mg: 7) | 103 | 1.360 | 50 | 104 |
| M8 | M8 (Mg: 10) | 98 | 1.360 | 50 | 99 |
| M9 | M9 (None) | 100 (Reference value) | 1.331 | 61 | 100 (Reference value) |

The results of Table 5 show that the batteries M2 to M7 containing the nickel oxyhydroxides M2 to M7 in which Mg was dissolved in an amount of 0.1 to 7 mol% exhibited higher characteristics during the high loaded discharge (continuous discharge at 1 W) and the pulse discharge than other batteries. In the nickel oxyhydroxide M1 having an extremely low Mg concentration of 0.05 mol%, sometimes the effect of enhancing the oxidation reduction potential or the electron conductivity did not appear sufficiently. Further, in the nickel oxyhydroxide M8 having an extremely high Mg concentration of 10 mol%, the amount of nickel relative to that of Mg became small, so that sufficient capacity was not ensured.

### <<Example 4>>

In this example, nickel oxyhydroxide in which Mg and element M other than Mg were dissolved was prepared, and an experiment was conducted using the nickel oxyhydroxide.
(Preparation of Nickel Hydroxide as Raw Material)
A small amount of hydrazine as a reducing agent and pure water were added to a reaction vessel equipped with a stirring blade. While the vessel was bubbled with nitrogen gas, constant amounts of aqueous solution of nickel sulfate (II), aqueous solution of magnesium sulfate (II), aqueous solution of zinc sulfate (II), aqueous solution of sodium hydroxide, each at a predetermined concentration, and ammonium water were fed by a pump. During the addition, the vessel was continuously stirred, and the pH was maintained at a constant level. Even after the addition, the vessel was continuously stirred sufficiently to precipitate the nuclei of nickel hydroxide and grow the nuclei. The synthesis conditions, such as the concentration of nickel-ammine complex ion, pH and temperature in the vessel, were set the same as in Example 1. Subsequently, the obtained particles were heated in another aqueous solution of sodium hydroxide to remove sulfate ions. The particles were then washed with water, and dried in a vacuum. Thereby, nickel hydroxide e (composition: Ni_{0.95}Mg_{0.025}Zn_{0.025}(OH)₂) as the raw material was prepared.

Nickel hydroxide f (composition: Ni_{0.95}Mg_{0.025}Co_{0.025}(OH)₂) was prepared in the same manner as described above except that an aqueous solution of cobalt sulfate (II) was used in place of the aqueous solution of zinc sulfate (II).

Nickel hydroxide g (composition: Ni_{0.95}Mg_{0.025}Mn_{0.025} (OH)₂) was prepared in the same manner as described above except that an aqueous solution of manganese sulfate (II) was used in place of the aqueous solution of zinc sulfate (II).

The obtained nickel hydroxides e to g were found to comprise a crystal having a β type structure and to have the following physical properties:
average particle size based on volume: approximately 10 µm,
tap density (500 taps): approximately 2.1 g/cm³, and
BET specific surface area: approximately 11 m²/g.

### (Preparation of Nickel Oxyhydroxide)

In the same manner as in Example 1, the nickel hydroxides e to g were converted to nickel oxyhydroxides. The obtained particles were thoroughly washed with water, and dried in a vacuum at 60°C for 24 hours. Thereby, nickel oxyhydroxides E to G were prepared.

The obtained nickel oxyhydroxides E to G were found to comprise a crystal having a β type structure and to have the following physical properties:
average particle size based on volume: approximately 10 µm,
tap density (500 taps): approximately 2.2 g/cm³,
BET specific surface area: approximately 15 m²/g, and
average nickel valence : approximately 3.0 (2.98 to 3.02).

### (Production of Positive Electrode Material Mixture Pellet)

Positive electrode material mixture pellets E to G containing the nickel oxyhydroxides E to G were produced in the same manner as in Example 1.

### (Production of Nickel-Manganese Battery)

Nickel-manganese batteries E to G were produced in the same manner as in Example 1 except using the positive electrode material mixture pellets E to G. The amounts of the positive electrode material mixtures filled into the batteries were all equal.

### (Evaluation of Nickel-Manganese Battery)

In the same manner as in Example 1, the obtained batteries E to G were evaluated in terms of high loaded discharge performance and pulse discharge characteristic. The results are shown in Table 6. The discharge time of the batteries E to G is given in relative terms, with 100 representing the discharge time of the nickel-manganese battery D produced in Example 1. Likewise, the total discharge time of the batteries E to G is given in relative terms, with 100 representing the total discharge time of the nickel-manganese battery D.

### <Low Loaded Discharge Performance>

The initial state batteries E to G were continuously discharged at a constant current of 50 mA (low load) at 20°C, and the discharge time until the battery voltage reached 0.9 V was measured. The batteries A and D produced in Example 1 were also evaluated in the same manner as above. The results are shown in Table 6. The initial discharge capacity of the batteries A, E to G is given in relative terms, with 100 representing the initial discharge capacity of the nickel-manganese battery D produced in Example 1.

### <Storage Characteristic>

The batteries E to G after storage for one week at 60°C were continuously discharged at a constant current of 50 mA at 20°C, during which the discharge capacity until the battery voltage reached an end-of-discharge voltage of 0.9 was measured. The batteries A and D produced in Example 1 were also evaluated in the same manner as above. The results are shown in Table 6. The discharge capacity after storage of the batteries A, E to G is given in relative terms, with 100 representing the discharge capacity after storage of the nickel-manganese battery D.

**Table 6**

| Battery | Nickel oxyhydroxide (Dissolved element: mol%) | Continuous discharge at 1W | | Pulse discharge at 1 A | | Initial discharge capacity at 50 mA | Discharge capacity at 50 mA after storage at 60°C |
|---|---|---|---|---|---|---|---|
| | | Discharge time | Average voltage (mV) | Voltage decrease at 2nd pulse (mV) | Total discharge time | | |
| E | E (Mg: n=2 .5) | 105 | 1.358 | 52 | 108 | 100 | 103 |
| F | F (Mg: 2.5, Go: 2.5) | 105 | 1.357 | 52 | 107 | 105 | 97 |
| G | G (Mg: 2.5, Mn: 2.5) | 106 | 1.357 | 52 | 107 | 105 | 98 |
| A | A (Mg: 5) | 105 | 1.358 | 51 | 108 | 101 | 97 |
| D | D (None) | 100 | 1.331 | 61 | 100 | 100 | 100 |

The results of Table 6 show that the batteries containing the nickel oxyhydroxides E to G in which Mg and element M were dissolved together exhibited similar high loaded discharge performance and pulse discharge characteristic to those of the battery containing the nickel oxyhydroxide A in which only Mg was dissolved. Moreover, the battery containing the nickel oxyhydroxide E in which Mg and Zn were dissolved together tends to have higher storage characteristic than other batteries. This is presumably because the presence of Zn increased the oxygen production overvoltage on the nickel oxyhydroxide. Further, in the battery containing the nickel oxyhydroxide F in which Mg and Co were dissolved together and that containing the nickel oxyhydroxide G in which Mg and Mn were dissolved together, the capacity during low loaded discharge tends to be high. This is presumably because the presence of Co and Mn increased the nickel valence of each nickel oxyhydroxide.

As discussed above, the use of the nickel oxyhydroxide in which Mg is dissolved together with element M selected from Zn, Co and Mn results in improved high loaded discharge performance and pulse discharge characteristic, as well as improved storage characteristic or low loaded discharge characteristic.

### «Example 5»

In this example, positive electrode material mixture pellets were produced by adding a rare-earth oxide or ZnO to the nickel oxyhydroxides, and an experiment was conducted using the produced nickel oxyhydroxide.

As the nickel oxyhydroxides, the nickel oxyhydroxides A (solid solution containing Mg), C (solid solution containing Zn and Co) and D (pure nickel oxyhydroxide) prepared in Example 1, and the nickel oxyhydroxides E (solid solution containing Mg and Zn), F (solid solution containing Mg and Co) and G (solid solution containing Mg and Mn) were used.

As the rare-earth oxide, Y₂O₃, Er₂O₃, Tm₂O₃, Yb₂O₃ and Lu₂O₃ were used.

A positive electrode material mixture powder was prepared by combining and mixing electrolytic manganese dioxide, the nickel oxyhydroxide A, graphite, and one of the rare-earth oxides listed in Table 7 or ZnO, at a weight ratio of 49:45:5:1. An alkaline electrolyte in an amount of 1 part by weight was added to 100 parts by weight of the positive electrode material mixture powder, followed by stirring and mixing with a mixer until uniform. The resultant was sized to have a uniform particle size. The alkaline electrolyte used here was 40 wt% aqueous solution of potassium hydroxide. The obtained particulate product was pressed into hollow cylindrical pellets. In this manner, positive electrode material mixture pellets A1 to A7 were produced.

As can be seen from Table 7, the positive electrode material mixture pellet A7 was produced without adding any additive such as the rare-earth oxide or ZnO. In this case also, the weight ratio among electrolytic manganese, the nickel oxyhydroxide A and graphite was set to 49:45:5.

Positive electrode material mixture pellets C1 to C6, D1 to D6, E1 to E6, F1 to F6 and G1 to G6 each containing each additive, as well as positive electrode material mixture pellets C7, D7, E7 F7 and G7 containing no additive were produced in the same manner as above using the nickel oxyhydroxides C to G.

**Table 7**

| Nickel oxyhydroxide (Dissolved element :mol%) | Additive | | | | | | |
|---|---|---|---|---|---|---|---|
| | Y₂O₃ | Er₂O₃ | Tm₂O₃ | Yb₂O₃ | Lu₂O₃ | ZnO | None |
| A (Mg: 5) | Pellet A1 | Pellet A2 | Pellet A3 | Pellet A4 | Pellet A5 | Pellet A6 | Pellet A7 |
| C (Zn:2.5, Co:2.5) | Pellet C1 | Pellet C2 | Pellet C3 | Pellet C4 | Pellet C5 | Pellet C6 | Pellet C7 |
| D (None) | Pellet D1 | Pellet D2 | Pellet D3 | Pellet D4 | Pellet D5 | Pellet D6 | Pellet D7 |
| E (Mg:2.5, Zn:2.5) | Pellet E1 | Pellet E2 | Pellet E3 | Pellet E4 | Pellet E5 | Pellet E6 | Pellet E7 |
| F (Mg:2.5, Co:2.5) | Pellet F1 | Pellet F2 | Pellet F3 | Pellet F4 | Pellet F5 | Pellet F6 | Pellet F7 |
| G (Mg:2.5, Mn:2.5) | Pellet G1 | Pellet G2 | Pellet G3 | Pellet G4 | Pellet G5 | Pellet G6 | Pellet G7 |

### (Production of Nickel-Manganese Battery)

Nickel-manganese batteries A1 to A7, C1 to C7, D1 to D7, E1 to E7, F1 to F7 and G1 to G7 were produced in the same manner as in Example 1 except using the positive electrode material mixture pellets A1 to A7, C1 to C7, D1 to D7, E1 to E7, F1 to F7 and G1 to G7. The amounts of the positive electrode material mixtures filled into the batteries were all equal.

### (Evaluation of Nickel-Manganese Battery)

In the same manner as in Example 1, the obtained batteries were evaluated in terms of high loaded discharge performance, pulse discharge characteristic, low loaded discharge performance and storage characteristic. The results are shown in Table 8. The discharge time during continuous discharge at 1 W, the total discharge time during pulse discharge at 1 A and the initial discharge capacity and discharge capacity after storage during low loaded discharge for the batteries except for the battery D7 are given in relative terms, with 100 representing those of the battery D7.

**Table 8a**

| Batter | Additive | Continuous discharge at 1 W | | Pulse discharge at 1 A | | Initial Discharge capacity at 50 mA | Discharge capacity at 50 mA after storage at 60°C |
|---|---|---|---|---|---|---|---|
| | | Discharge time | Average voltage (mV) | Voltage decrease at 2nd pulse (mV) | Total discharge time | | |
| A1 | Y₂O₃ | 106 | 1.358 | 50 | 109 | 101 | 106 |
| A2 | Er₂O₃ | 105 | 1.357 | 51 | 108 | 101 | 107 |
| A3 | Tm₂O₃ | 105 | 1.358 | 51 | 108 | 100 | 107 |
| A4 | Yb₂O₃ | 106 | 1.359 | 50 | 109 | 101 | 107 |
| A5 | Lu₂O₃ | 105 | 1.357 | 51 | 107 | 100 | 107 |
| A6 | ZnO | 104 | 1.358 | 51 | 107 | 100 | 97 |
| A7 | None | 105 | 1.358 | 51 | 108 | 101 | 97 |
| C1 | Y₂O₃ | 99 | 1.323 | 64 | 100 | 100 | 103 |
| C2 | Er₂O₃ | 98 | 1.324 | 65 | 99 | 99 | 103 |
| C3 | Tm₂O₃ | 99 | 1.324 | 66 | 100 | 99 | 104 |
| C4 | Yb₂O₃ | 98 | 1.325 | 64 | 99 | 100 | 102 |
| C5 | Lu₂O₃ | 98 | 1.326 | 65 | 99 | 99 | 103 |
| C6 | ZnO | 98 | 1.325 | 66 | 99 | 99 | 103 |
| C7 | None | 99 | 1.325 | 65 | 100 | 99 | 102 |
| D1 | Y₂O₃ | 100 | 1.329 | 62 | 100 | 100 | 102 |
| D2 | Er₂O₃ | 100 | 1.330 | 62 | 100 | 100 | 102 |
| D3 | Tm₂O₃ | 99 | 1.329 | 64 | 99 | 99 | 103 |
| D4 | Yb₂O₃ | 100 | 1.331 | 62 | 100 | 99 | 103 |
| D5 | Lu₂O₃ | 99 | 1.330 | 62 | 100 | 99 | 102 |
| D6 | ZnO | 99 | 1.330 | 62 | 99 | 99 | 101 |
| D7 | None | 100 | 1.331 | 61 | 100 | 100 | 100 |

**Table 8b**

| Battery | Additive | Continuous discharge at 1 W | | Pulse discharge at 1 A | | Initial discharge capacity at 50 mA | Discharge capacity at 50 mA after storage at 60°C |
|---|---|---|---|---|---|---|---|
| | | Discharge time | Average voltage (mV) | Voltage decrease at 2nd pulse (mV) | Total discharge time | | |
| E1 | Y₂O₃ | 106 | 1.357 | 50 | 108 | 101 | 109 |
| E2 | Er₂O₃ | 106 | 1.358 | 51 | 107 | 100 | 109 |
| E3 | Tm₂O₃ | 105 | 1.357 | 52 | 108 | 100 | 108 |
| E4 | Yb₂O₃ | 106 | 1.356 | 51 | 108 | 101 | 109 |
| E5 | Lu₂O₃ | 105 | 1.357 | 52 | 107 | 100 | 109 |
| E6 | ZnO | 105 | 1.357 | 52 | 108 | 100 | 103 |
| E7 | None | 105 | 1.358 | 52 | 108 | 100 | 103 |
| F1 | Y₂O₃ | 106 | 1.358 | 51 | 108 | 105 | 106 |
| F2 | Er₂O₃ | 105 | 1.357 | 52 | 107 | 104 | 105 |
| F3 | Tm₂O₃ | 105 | 1.357 | 52 | 108 | 105 | 106 |
| F4 | Yb₂O₃ | 106 | 1.358 | 51 | 108 | 105 | 106 |
| F5 | Lu₂O₃ | 105 | 1.357 | 52 | 107 | 104 | 105 |
| F6 | ZnO | 105 | 1.357 | 52 | 107 | 105 | 98 |
| F7 | None | 105 | 1.357 | 52 | 107 | 105 | 97 |
| G1 | Y₂O₃ | 106 | 1.356 | 53 | 107 | 105 | 107 |
| G2 | Er₂O₃ | 105 | 1.357 | 52 | 107 | 104 | 106 |
| G3 | Tm₂O₃ | 106 | 1.357 | 52 | 106 | 104 | 106 |
| G4 | Yb₂O₃ | 106 | 1.356 | 52 | 107 | 104 | 105 |
| G5 | Lu₂O₃ | 105 | 1.356 | 53 | 107 | 105 | 106 |
| G6 | ZnO | 105 | 1.356 | 53 | 106 | 104 | 98 |
| G7 | None | 106 | 1.357 | 52 | 107 | 105 | 98 |

As can be seen from Table 8, the batteries containing the nickel oxyhydroxide A in which Mg was dissolved alone, the nickel oxyhydroxide E in which Mg and Zn were dissolved together, the nickel oxyhydroxide F in which Mg and Co were dissolved together, and the nickel oxyhydroxide G in which Mg and Mn were dissolved together, even when a small amount of additive such as yttrium oxide was added to each of the positive electrode material mixtures, exhibited excellent high loaded discharge performance and pulse discharge characteristic.

In particular, the batteries having the positive electrode material mixture containing any one of Y₂O₃, Er₂O₃, Tm₂O₃, Yb₂O₃ and Lu₂O₃ exhibited a very high level of discharge capacity after storage for one week at 60°C. It is presumed that the rare-earth oxides dissolve in the alkaline electrolyte in a slightly small amount and reprecipitate while forming a hydroxide on the nickel oxyhydroxide, whereby a film is formed. This film is considered to have the effect of increasing the oxygen production overvoltage and suppressing the self-discharge.

As described above, by adding a small amount of the rare-earth oxide to the positive electrode material mixture, it is possible to significantly improve the storage characteristic of the battery.
In the examples given above, the nickel oxyhydroxides used had an average particle size based on volume of approximately 10 µm, a tap density (500 taps) of approximately 2.2 g/cm³ and a BET specific surface area of approximately 15 m²/g. However, in terms of moldability and filling property of the positive electrode material mixture pellets, similar effect of the present invention can be obtained as long as the average particle size based on volume and the tap density (500 taps) are set to 8 to 20 µm and not less than 2 g/cm³, respectively.

### «Example 6»

In this example, an investigation was conducted to find optimal average particle size and tap density of the nickel oxyhydroxide in which Mg is dissolved.
(Preparation of Nickel Hydroxide as Raw Material)
Constant amounts of aqueous solution of nickel sulfate (II), aqueous solution of magnesium sulfate (II), aqueous solution of sodium hydroxide, each at a predetermined concentration, and ammonium water were fed, by a pump, into a reaction vessel equipped with a stirring blade, followed by thorough stirring while the pH and temperature in the vessel were maintained at 13.1 and 50°C, respectively, so as to produce spherical nickel hydroxide (composition: Ni_{0.95}Mg_{0.05}(OH)₂). In this production process, the residence time during which the particles stayed in the vessel was changed to 6, 10, 14, 18 and 22 hours. Thereby, five different nickel hydroxides having different average particle sizes were prepared.

The obtained particles were heated in another aqueous solution of sodium hydroxide to remove sulfate ions. The particles were then washed with water, and dried in a vacuum. Thereby, there were prepared nickel hydroxide q1 (with a residence time of 6 hours), nickel hydroxide q2 (with a residence time of 10 hours), nickel hydroxide q3 (with a residence time of 14 hours), nickel hydroxide q4 (with a residence time of 18 hours) and nickel hydroxide q5 (with a residence time of 22 hours).
Similarly, nickel hydroxide r1 (with a residence time of 6 hours), nickel hydroxide r2 (with a residence time of 10 hours), nickel hydroxide r3 (with a residence time of 14 hours), nickel hydroxide r4 (with a residence time of 18 hours) and nickel hydroxide r5 (with a residence time of 22 hours) were prepared in the same manner as described above except that the pH in the vessel during the synthesis was changed to 12.3 (temperature: 50°C).

The obtained nickel hydroxides q1 to q5 and r1 to r5 were found to comprise a crystal having a β type structure by powder X-ray diffractometry.

### (Preparation of Nickel Oxyhydroxide)

Subsequently. the nickel hydroxide q1 in an amount of 200 g was admitted into 1 L of aqueous solution of sodium hydroxide at a concentration of 0.1 mol/L. Then, a sufficient amount of aqueous solution of sodium hypochlorite (effective chlorine concentration: 10 wt%) serving as an oxidizing agent was added thereto, followed by stirring to convert it to nickel oxyhydroxide. The obtained particles were thoroughly washed with water, dried in a vacuum at 60°C for 24 hours. Thereby, nickel oxyhydroxide Q1 was prepared.

In the same manner as above, the nickel hydroxides q2 to q5 and r1 to r5 were converted to nickel oxyhydroxides Q2 to Q5 and R1 to R5.
Table 9 shows the measured values of the average particle size (D50) based on volume and those of the tap density (500 taps) for the obtained nickel oxyhydroxides Q1 to Q5 and R1 to R5.

**Table 9**

| Type of nickel oxyhydroxide | Average particle size (D50) [µm] | Tap density [g/cm3] |
|---|---|---|
| Q1 | 5.5 | 2.02 |
| Q2 | 8.2 | 2.09 |
| Q3 | 13.3 | 2.15 |
| Q4 | 19.7 | 2.23 |
| Q5 | 22.4 | 2.18 |
| R1 | 5.3 | 1.85 |
| R2 | 8.3 | 1.88 |
| R3 | 14.5 | 1.92 |
| R4 | 19.4 | 1.93 |
| R5 | 22.2 | 1.90 |

The following tendency was observed: the longer the residence time during the synthesis of the nickel hydroxide, the larger the average particle size of the nickel oxyhydroxide became; and when the pH during the synthesis was lowered, the tap density became low. These ten different nickel oxyhydroxides were confirmed to have an average nickel valence of 2.97 to 3.00 by the oxidation reduction titration.

### (Preparation of Positive Electrode Material Mixture Pellet)

Positive electrode material mixture pellets Q1 to Q5 and R1 to R5 containing the nickel oxyhydroxides Q1 to Q5 and R1 to R5 were produced in the same manner as in Example 1.

### (Production of Nickel-Manganese Battery)

Nickel-manganese batteries Q1 to Q5 and R1 to R5 were produced in the same manner as in Example 1 except using the positive electrode material mixture pellets Q1 to Q5 and R1 to R5. The amounts of the positive electrode material mixtures filled into the batteries were all equal.

### (Evaluation of Nickel-Manganese Battery)

The obtained batteries Q1 to Q5 and R1 to R5 were evaluated in terms of storage characteristic.
The batteries Q1 to Q5 and R1 to R5 were stored in an atmosphere of 60°C for one week. Thereafter, each battery was continuously discharged at a constant current of 50 mA at 20°C, during which the discharge capacity until the battery voltage reached an end-of-discharge voltage of 0.9 V was measured. The discharge capacities for the batteries Q1 to Q5 and R1 to R5 are shown in Table 10, where the discharge capacity is given in relative terms, with 100 representing that of the battery Q1.

**Table 10**

| Type of battery | Discharge capacity at 50 mA after storage at 60° C |
|---|---|
| Q1 | 100 (Reference value) |
| Q2 | 112 |
| Q3 | 112 |
| Q4 | 110 |
| Q5 | 99 |
| R1 | 89 |
| R2 | 94 |
| R3 | 99 |
| R4 | 98 |
| R5 | 90 |

Even the nickel oxyhydroxides having the same composition (Mg amount: 5 mol%) and an average nickel valence of 2.97 to 3.00 can differ significantly in terms of storage characteristic due to the average particle size and the tap density. From Table 10, it is clear that the batteries Q2, Q3 and Q4 having an average particle size of 8 to 20 µm and a tap density of not less than 2 g/cm³ exhibited exceptionally higher storage performance. Although the reason for this has not yet been clarified, it is surmised that the improvement in storage performance correlates with the fact that the contact between particles in the positive electrode material mixture pellets has been improved. In other words, the particle size and tap density of the nickel oxyhydroxides were controlled to appropriate levels, so that the contact between particles in the positive electrode material mixture pellets was improved.

In the examples given above, the weight ratio among the electrolytic manganese dioxide, the nickel oxyhydroxide and the graphite conductive material was basically set to 50:45:5. However, by setting the amount of the electrolytic manganese dioxide to 20 to 90 wt% relative to the total amount of the electrolytic manganese dioxide and the nickel oxyhydroxide, that of the nickel oxyhydroxide to 10 to 80 wt% relative to the same, and that of the graphite conductive material to 3 to 10 wt% relative to the total amount of the electrolytic manganese dioxide, the nickel oxyhydroxide and the graphite conductive material, it is possible to obtain an alkaline battery with similarly excellent balance of characteristics and cost.

In Example 4, the solid solution nickel oxyhydroxides containing Mg and at least one selected from Zn, Co and Mn were used. However, even when Mg is dissolved together with two or more selected from Zn, Co an Mn in the solid solution, an alkaline battery having excellent characteristics can be obtained.

In this specification, a description was not given of an example in which the average nickel valence of the solid solution nickel oxyhydroxide in which Mg is dissolved together with element M selected from Zn, Co and Mn is changed, but it can be easily deduced, from the results of Example 2, that the average nickel valence should be controlled to 2.95 to 3.05 in order to obtain excellent battery characteristics.

Further, although the amount of Mg and that of Zn, Co or Mn contained in the solid solution were both set to 2.5 mol%, it can be deduced, from the results of Example 3, that as long as the amount of Mg is not less than 0.1 mol% and the total amount of Mg and the metal element except Ni is not greater than 7 mol%, an alkaline battery having almost similar characteristics can be obtained.

In Example 5, the amount of the rare-earth oxide such as yttrium oxide was set to 1 wt% of the entire positive electrode material mixture. However, as long as the amount of at least one or two or more selected from Y₂O₃, Er₂O₃, Tm₂O₃, Yb₂O₃ and Lu₂O₃ is set to 0.1 to 2 wt% of the entire positive electrode material mixture, an alkaline battery that exhibits a similar level of storage characteristic can be obtained.

Further, in the examples given above, so-called inside-out type alkaline dry batteries were produced in which the cylindrical positive electrode material mixture pellets, the separator and the negative electrode zinc gel were disposed in the cylindrical positive electrode case. However, the present invention is applicable to batteries with different structures including an alkaline button battery and an alkaline prismatic battery.

### Industrial Applicability

According to the present invention, it is possible to obtain a higher capacity alkaline battery containing a positive electrode material mixture comprising the nickel oxyhydroxide as well as to improve battery characteristics during high loaded discharge or pulse discharge.

## Claims

1. An alkaline battery comprising a positive electrode, a negative electrode and an alkaline electrolyte, said positive electrode including a positive electrode material mixture containing electrolytic manganese dioxide and nickel oxyhydroxide,
wherein said nickel oxyhydroxide comprises a crystal in which at least Mg is dissolved, and has a tap density determined after 500 taps of not less than 2 g/cm³, an average particle size based on volume of 8 to 20 µm, and an average nickel valence of 2.95 to 3.05.

2. The alkaline battery in accordance with claim 1,
wherein the amount of Mg is 0.1 to 7 mol% relative to the total amount of Ni and Mg contained in said nickel oxyhydroxide.

3. The alkaline battery in accordance with claim 1,
wherein the amount of electrolytic manganese dioxide is 20 to 90 wt% relative to the total amount of said electrolytic manganese dioxide and said nickel oxyhydroxide contained in said positive electrode material mixture, and
the amount of said nickel oxyhydroxide is 10 to 80 wt% relative to said total amount.

4. The alkaline battery in accordance with claim 1,
wherein said positive electrode material mixture further comprises a graphite conductive material, and
the amount of said graphite conductive material is 3 to 10 wt% relative to the total amount of said electrolytic manganese dioxide, said nickel oxyhydroxide and said graphite conductive material contained in said positive electrode material mixture.

5. The alkaline battery in accordance with claim 4,
wherein said positive electrode material mixture further comprises at least one rare-earth oxide selected from the group consisting of Y₂O₃, Er₂O₃, Tm₂O₃, Yb₂O₃ and Lu₂O₃, and
the amount of said rare-earth oxide is 0.1 to 2 wt% relative to the total amount of said electrolytic manganese dioxide, said nickel oxyhydroxide, said graphite conductive material and said rare-earth oxide contained in said positive electrode material mixture.

6. An alkaline battery comprising a positive electrode, a negative electrode and an alkaline electrolyte,
said positive electrode comprising a positive electrode material mixture containing electrolytic manganese dioxide and nickel oxyhydroxide,
wherein said nickel oxyhydroxide comprises a crystal in which at least Mg as the essential component and at least one element M selected from the group consisting of Co, Zn and Mn are dissolved, and
said nickel oxyhydroxide has a tap density determined after 500 taps of not less than 2 g/cm³, an average particle size based on volume of 8 to 20 µm, and an average nickel valence of 2.95 to 3.05.

7. The alkaline battery in accordance with claim 6,
wherein the amount of Mg is not less than 0.1 mol% relative to the total amount of Ni and Mg contained in said nickel oxyhydroxide, and
the total amount of Mg and element M is not greater than 7 mol% relative to said total amount.

8. The alkaline battery in accordance with claim 6,
wherein the amount of said electrolytic manganese dioxide is 20 to 90 wt% relative to the total amount of said electrolytic manganese dioxide and said nickel oxyhydroxide contained in said positive electrode material mixture, and
the amount of said nickel oxyhydroxide is 10 to 80 wt% relative to said total amount.

9. The alkaline battery in accordance with claim 6,
wherein said positive electrode material mixture further comprises a graphite conductive material, and
the amount of said graphite conductive material is 3 to 10 wt% relative to the total amount of said electrolytic manganese dioxide, said nickel oxyhydroxide and said graphite conductive material contained in said positive electrode material mixture.

10. The alkaline battery in accordance with claim 9,
wherein said positive electrode material mixture further comprises at least one rare-earth oxide selected from the group consisting of Y₂O₃, Er₂O₃, Tm₂O₃, Yb₂O₃ and Lu₂O₃, and
the amount of said rare-earth oxide is 0.1 to 2 wt% relative to the total amount of said electrolytic manganese dioxide, said nickel oxyhydroxide, said graphite conductive material and said rare-earth oxide contained in said positive electrode material mixture.
